(19) Europäisches Patentamt
European Patent Office
Office européen des brevets

(11) Publication number: 0 129 242 B1

# (12) EUROPEAN PATENT SPECIFICATION

(45) Date of publication of patent specification: 20.05.87

(51) Int. Cl.[4]: G 01 B 11/16, G 01 N 3/08

(21) Application number: 84106992.5

(22) Date of filing: 19.06.84

## (54) Tensile tester.

(30) Priority: 20.06.83 JP 110535/83

(43) Date of publication of application: 27.12.84 Bulletin 84/52

(45) Publication of the grant of the patent: 20.05.87 Bulletin 87/21

(84) Designated Contracting States: DE FR GB

(56) References cited:
GB-A-1 416 541
GB-A-1 553 101
US-A-3 435 231

The file contains technical information submitted after the application was filed and *not included in this specification*

(73) Proprietor: SUMITOMO CHEMICAL COMPANY, LIMITED
15 Kitahama 5-chome Higashi-ku
Osaka-shi Osaka 541 (JP)

(72) Inventor: Ninomiya, Sunao
6-13-17, Aobadai
Ichihara-Shi Chiba-Ken (JP)
Inventor: Miura, Yasuhiro
4-14-15, Chishirodai Minami
Chiba-Shi Chiba-Ken (JP)
Inventor: Iwata, Hiromu
2-6-11, Takayanagi
Kisarazu-Shi Chiba-Ken (JP)
Inventor: Matsuyama, Shuji
1-9, Yushudai Nishi
Ichihara-Shi Chiba-Ken (JP)

(74) Representative: Lehn, Werner, Dipl.-Ing. et al
Hoffmann, Eitle & Partner Patentanwälte
Arabellastrasse 4 (Sternhaus)
D-8000 München 81 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 129 242 B1

Courier Press, Leamington Spa, England.

**Description**

This invention relates to a tensile tester according to the preamble of claim 1 (see GB—A—1 416 541).

As a measurement method of elongations of a specimen, there are heretofore known, for example, a direct measurement method in which a testing person reads directly elongations of a specimen by applying a scale to it; a non-contact measurement method for which visible rays are used; a contact measurement method in which a specimen is attached with a jig for elongation measurement to determine the elongations from displacement magnitudes of the jig; etc.

The direct measurement method, however, is not suited for high accuracy measurement since the distance between the moving bench marks is tracked with the unaided eye. A non-contact method is known from the British Patent document GB—A—1 416 541 which comprises: a light source for illuminating a bench mark on a specimen; detection means for detecting light reflected by said bench mark when illuminated by said source, and computation means for computing movement of said bench mark in response to an output of said detection means. When this method is applied to a wide variety of colored specimens having a large elongation such as plastics or rubbers, it has encountered a problem when the texture of a specimen is discolored as the elongation of it increases and the contrast between the texture and the bench marks is changed. Accordingly, the method is defective in that elongations of all the specimens cannot always be measured accurately. For instance, the case of a black specimen will be referred to. When the black specimen is marked with white bench marks thereon and drawn, the black specimen is discolored to such a white hue that cannot be distinguished from the white color of the bench marks. When the black specimen is marked with bench marks of a red series color and drawn, before drawing the red colour of the bench marks is brighter than the black color of the specimen, but as the specimen is drawn under load, it becomes discolored to a white hue brighter than the red series color of the bench marks and the brightness of the specimen is thus inverted. As a consequence, the detection of the bench marks is not feasible. Further, visible rays from the projector are reflected by the discolored white hue portion of the specimen and are incident upon the optic, so that the detection of the bench marks is even more difficult. For the reasons above, it is practically impossible to use visible rays for the measurement of elongations of a wide variety of specimens and all colored specimens.

A contact measurement method is, as used with extensometers, supplied by Instron Ltd., for example the 2630, 2610 and 2603 series. The contact measurement method is disadvantageous in that it is troublesome to mount the jig for elongation measurement on the specimen whenever it is measured, and in that the weight of the jig may often be responsible for causing errors. In particular, in the case of a specimen such a film which is susceptible to break-down even under a slight tensile load, a further drawback is seen in the fact that a load is imposed on the portion of the specimen to which the jig is attached, from where the specimen is broken down, so that it is not possible to measure elongations. Further, when the extensometer is brought into direct contact with a specimen, the life of the apparatus is reduced.

Any of the prior art measurement methods have thus many problems and drawbacks to be solved and improved for the measurement of elongations with high accuracy and precision.

With a view to coping with the prior art situation as described above, an object of this invention is to provide a tensile tester suitable for measuring elongations of a wide variety of colored specimens with high accuracy.

Therefore, briefly summarised this invention provides a tensile tester as mentioned above using an ultraviolet lamp as a light source of a projector and a fluorescent bench mark.

The effect due to the reflective rays of ultraviolet rays by the white discolored portion of a specimen when loaded and drawn can be precluded by attaching a filter to the optics assembly.

Thus, the incident light upon the detector is only of the luminescent light due to emission of the bench marks, so that according to the tester of this invention, it is possible to measure a wide variety of colored specimens with high accuracy.

Embodiments of tensile tester according to this present invention will be hereinafter described in detail with reference to the accompanying drawings, in which:

Fig. 1 is a diagrammatic representation showing one embodiment of a tensile tester of this invention;

Fig. 2 is an illustration showing a constitution of the projector as shown in Fig. 1; and

Fig. 3 is an illustration showing a constitution of the optics as shown in Fig. 1.

In Fig. 1, there are shown projectors 6, 10 for irradiating with ultraviolet rays two bench marks 2, 3 marked on a specimen 1 with a fluorescent coating and optics assembling 7, 11 for receiving and detecting luminescent light rays which the bench marks of the specimen emit upon receiving the radiation from the projectors 6, 10. These projectors and optics constitute two sets of arrangements of projector-optics 6, 7 and 10, 11, which are disposed so as to correspond to the positions of the bench marks 2, 3 on the specimen marked at an interval in the elongation direction of it, thus constituting a fundamental element of the tensile tester.

Both the projector-optics arrangements 6, 7 and 10, 11 are mounted on screws 14, 15 for their movement, which screws are actuated to revolve by the revolution of balancing electric motors 5, 9, which revolution is caused according to the output of detectors (described hereinafter) incorporated in the optics 7, 11, whereby the respective arrangements of projector-optics 6, 7 and 10, 11 can track automatically the bench marks 2, 3 by detecting the amount of the incident light upon the optics 7, 11.

The reference numerals 4, 8 are elongation detectors for transmitting the displacements of the projector-optics arrangements 6, 7 and 10, 11 displaced upon undergoing the revolution of the balancing electric motors 5, 9, as displacement signals.

The elongation detectors 4, 8 are located at the diametrically opposite ends of the balancing electric motors 5, 9 and serve to input the respective transmission signals from the arrangements to an arithmetic unit 12 for calculation of elongation differences, operation results being recorded on a recorder 13, if required.

Important features of the tensile tester of this invention reside in the respective constitutions as described above, and of particular importance is the constitution of the arrangements comprised of the projectors 6, 10 whose light source is an ultraviolet lamp and the optics 7, 11 paired with them.

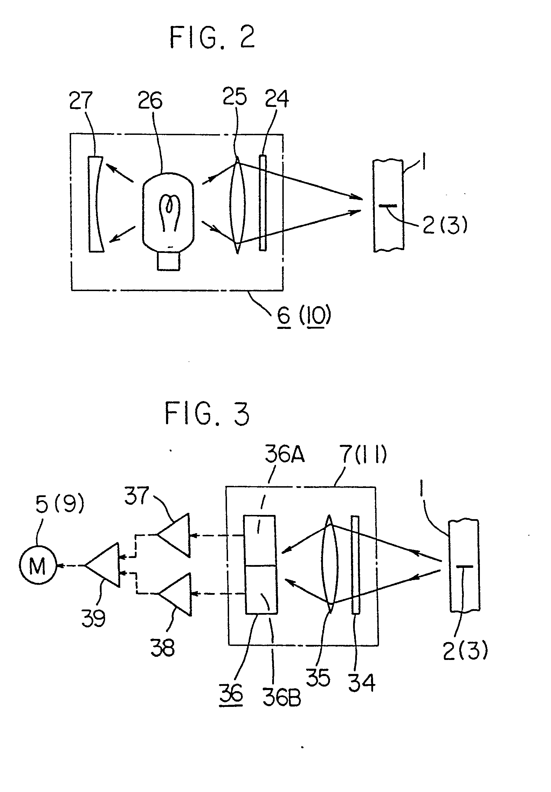

Fig. 2 and 3 illustrate the particulars of the projectors 6, 10 and the optics 7, 11.

The projectors 6, 10 are each constructed, as shown in Fig. 2, of an ultraviolet lamp 26 provided as a light source, a combination of a concave mirror 27 and a convex lens 25 which combination serves to irradiate efficiently the emission light rays from the lamp 26 upon the bench marks 2, 3 on the specimen 1 and a light filter 24 for intercepting and removing the visible rays from the ultraviolet lamp 26 thereby to irradiate the bench marks 2, 3 only with the ultraviolet rays. Thus, the effect due to the reflection from the specimen 1 which comes into a problem when visible rays are irradiated is precluded.

The optics assemblies 7, 11 are, as shown in Fig. 3, each equipped with a filter 34 for removing the ultraviolet rays when receiving the luminescent rays emitted by the bench marks 2, 3 on the specimen 1, a convex lens 35 for condensing thereon the visible rays from which the ultraviolet rays are removed and a multi-element semiconductor detector 36 for detecting amount of the incident light thus condensed.

In this way the optics assemblies are constructed so as to collect only the visible rays on the convex lens 35 and to introduce them into the detector 36, whereby their reliability as a device is ensured.

In the setup of the optics assemblies 7, 11 as illustrated, the multi-element semiconductor detector 36 assumes the form of two multi-element semiconductor detectors 36A, 36B in which the multi-element is equally divided into two. A mechanism is adopted in which the outputs of the multi-element semiconductor detectors 36A, 36B are amplified by respective amplifiers 37, 38 and then supplied to a differential amplifier 39 for amplification, and the amplified output in turn sets the balancing electric motors 5, 9 into revolution.

In this mechanism, if the optics 7, 11 and the bench marks 2, 3 correspond completely to each other, the outputs of the bisected multi-element semiconductor detectors 36A, 36B of the multi-element semiconductor detector 36 are equal and the output of the differential amplifier 39 is zero. Consequently, the balancing electric motors 5, 9 are in a standstill state.

Conversely, if the correspondance between the bench marks 2, 3 and the optics l7, 11 deviates, the outputs of the equally two-divided multi-element semiconductor detectors 36A, 36A are different and the balancing electric motors 5, 9 continue to revolve until the difference between the outputs becomes zero, which revolution enables pairs of the projector-optics arrangements to be displaced and to continuously pursue automatically and precisely the targets of the bench marks 2, 3.

The construction of the tensile tester of this invention has been thus far described, and now the operation thereof will be described.

In measuring elongations of a specimen, the two bench marks 2, 3 marked on the specimen 1 as shown in Fig. 1 are first irradiated with ultraviolet rays from the projectors 6, 10 and only the bench marks are caused to emit luminescent lights. The luminescent light thus emitted is received by the optics assemblies 7, 11. The respective beams of the luminescent light of the bench marks are passed through the filters 34 housed in the optics assemblies (Cf. Fig. 3), by which the ultraviolet rays are absorbed and removed, and only the resulting visible rays are collected by the convex lens 35 and introduced into the multi-element semiconductor detectors 36. The respective visible rays are detected with the detectors 36 to transmit analogue signals which, after undergoing amplification action in the optics operate to rotate the balancing electric motors 5, 9.

The actuation of revolution of the balancing electric motors 5, 9, on the one hand, puts the screws 14, 15 for movement of the projector-optic arrangements 6, 7 and 10, 11 into rotation, which causes them to pursue the positions of the bench marks 2, 3 and to be displaced until an equilibrium condition is reached. On the other hand, it brings the elongation detectors, 4, 8 provided at the diametrically opposite ends of the balancing electric motors 5, 9 into operation, and causes transmission of the displacement signals from the arrangements of the projector and optic assembly to the arithmetic unit 12 for calculation of the elongation difference.

When both the transmission signals from the elongation detectors 4, 8 are supplied in this way, the difference between both signals is obtained by the operation of the arithmetic unit 12 as elongation differences. Consequently, elongations between both bench marks 2, 3 can be automatically measured.

Thus, the tensile tester of this invention enables measurement of elongations of specimens with high accuracy by virtue of the combination of the ultraviolet projector and the optic incorporating the detector as well as provision of further mechanical elements.

The above description has been made of the embodiment in which two pairs of arrangements of the projector and optics are provided, but any variations and modifications may be made depending on the number of bench marks. For instance, a variation may be made in which the pair number of the projector-optics arrangements is increased with corresponding increase of the number of bench marks, thereby permitting measurement of a plurality of elongations between bench marks at the same time.

As described above, the tensile tester according to the tensile tester of this invention is conducted by using an ultraviolet lamp as a light source of the projector, submitting only the bench marks on a specimen beforehand marked to emission, detecting the luminescent light rays thus emitted with the detectors, causing the arrangements of paired projector and optics to pursue the bench marks following the detection, and measuring elongations between the bench marks by the provision of the elongation detectors and the arithmetic unit. As a consequence, the pursuit mechanism enable the projector-optics arrangements to perpetually pursue automatically with high accuracy the targets of the bench marks. Further, even when the tensile tester is applied to such specimens that have heretofore been difficult to measure with either the non-contact method or the contact method, such as a wide variety of colored specimens having a large elongation, e.g. plastics or rubber, or specimens susceptible to discoloration in their texture by elongating, it is possible to measure elongations with very good accuracy. In addition, there are no inconveniences as experienced in mounting a jig on a specimen and accordingly, causes of errors can be minimized. Hence, this invention is very useful and efficient in enhancing automation.

Thus, the tensile tester is provided with an apparatus capable of measuring elongations of a wide variety of specimens in non-contact manner and with high accuracy by irradiating the bench marks on a previously marked specimen with the aid of an ultraviolet lamp to cause emission only from the bench marks and detecting the luminescent light rays thus emitted.

**Claims**

1. A tensile tester comprising a projector (6, 10) and an optics assembly (7, 11) incorporating a detector (36; 36A, 36B) for receiving and detecting radiation from a bench mark (2, 3) on a specimen (1) as a result of the impingement of the radiation from said projector; tracking mechanism (5, 14; 9, 15) for causing said projector-optics arrangement to automatically track a bench mark (2, 3) in accordance with an output from the associated detector; movement sensor (4, 8) for said projector-optics arrangement for transmitting a displacement signal of the projector-optics arrangement thus displaced with the operation of said tracking mechanism; and an arithmetic unit (12, 13) for receiving the output signal from said movement sensor and computing specimen elongation therefrom, characterized in that the light source of the projector is an ultraviolet lamp (26) and the bench mark (2, 3) is fluorescent.

2. A tensile tester according to claim 1, comprising at least two sources (6, 10) for illuminating two spaced bench marks (2, 3) on a specimen (1), respective detection means being provided for detecting light emitted by respective bench marks, and the computation means (12) being arranged to compute distance between said marks.

3. A tensile tester as claimed in claim 1, wherein said detector (36) incorporated in the optics assembly is a multi-element semiconductor detector.

4. A tensile tester as claimed in claim 3, in which said multi-element semiconductor detector (36) comprises two equally divided multi-element semiconductors, the outputs of which are used to center the said projector-optics arrangement.

5. A tensile tester as claimed in any one of claims 1 to 4, in which said tracking mechanisms each comprise a balancing electric motor (5, 9) which is actuated in accordance with detection signals from the detector of the associated optics assembly and a lead-screw (14, 15) for movement of the associated said arrangement by rotation of the electric motor.

6. A tensile tester as claimed in any one of claims 1 to 5, in which said arithmetic unit (12, 13) includes a recorder (13) for recording the results thereof.

**Patentansprüche**

1. Zugprüfmaschine mit einer Projektionsanordnung (6, 10) und einer optischen Anordnung (7, 11) mit einem Detektor (36; 36a, 36b) zum Empfangen und Erfassen von Strahlung von einem Festpunkt (2, 3) auf einem Probestück (1) als Folge des Auftreffens der Strahlung von der Projektionsanordnung; Spurfolgemechanismus (5, 14; 9, 15) zum Bewirken, daß die Projektions- und optische Anordnung den Festpunkt (2, 3) entsprechend einer Ausgangsgröße von dem entsprechenden Detektor automatisch verfolgt; Bewegungsaufnehmer (4, 8) für die Projektions- und optische Anordnung zum Übertragen eines Verschiebungssignals der durch die Operation des Spurfolgemechanismus verschobenen Projektions- und optischen Anordnung; und einer Recheneinheit (12, 13) zum Empfangen des Ausgangssignals von dem Bewegungsaufnehmer und zum Berechnen der Probestückdehnung aus diesem, dadurch gekennzeichnet, daß die Lichtquelle der Projektionsanordnung eine Ultraviolettlampe (26) und der Festpunkt (2, 3) fluoreszierend ist.

2. Zugprüfmaschine nach Anspruch 1, mit wenigstens zwei Lichtquellen (6, 10) zum Beleuchten von zwei mit Abstand auf einem Probestück (1) angeordneten Festpunkten (2, 3), wobei entsprechende Erfassungsanordnungen zum Erfassen des Lichts, ausgestrahlt von entsprechenden Festpunkten, vorgesehen und die Berechnungsmittel (12) zum Berechnen des Abstands zwischen den Festpunkten angeordnet sind.

3. Zugprüfmaschine nach Anspruch 1, worin der in der optischen Anordnung eingebaute Detektor (36) ein Multielementhalbleiter-Detektor ist.

4. Zugprüfmaschine nach Anspruch 3, in der der Multielementhalbleiter-Detektor (36) zwei gleichgeteilte Multielementhalbleiter enthält, deren Ausgangsgrößen zum Zentrieren der Projektions- und optischen Anordnung benutzt werden.

5. Zugprüfmaschine nach einem der Ansprüche 1 bis 4, in der die Spurfolgemechanismen jeweils einen ausgleichenden elektrischen Motor (5, 9), der entsprechend Erfassungssignalen von dem Detektor der entsprechenden optischen Anordnung betätigt wird, und eine Verstellschraubenspindel (14, 15) zum Bewegen der entsprechenden Anordnung durch Rotation des elektrischen Motors, enthält.

6. Zugprüfmaschine nach einem der Ansprüche 1 bis 5, in der die Recheneinheit (12, 13) ein Aufzeichnungsgerät (13) zum Aufzeichnen der Ergebnisse aufweist.

**Revendications**

1. Appareil pour essais de traction comportant un projecteur (6, 10) et un ensemble (7, 11) d'optiques incluant un détecteur (36, 36A, 36B) pour recevoir et détecter un rayonnement d'un point de repère (2, 3) situé sur une éprouvette (1) par suite de l'incidence du rayonnement venant dudit projecteur; un mécanisme de poursuite (5, 14; 9, 15) pour amener le dispositif à projecteur et optiques à poursuivre automatiquement un point de repère (2, 3) d'après un signal de sortie du détecteur correspondant; un capteur (4, 8) de mouvement pour le dispositif à projecteur et à optiques pour émettre un signal de déplacement du dispositif à projecteur et optiques ainsi déplacé lors du fonctionnement dudit mecanisme de poursuite; et une unité de calcul (12, 13) pour recevoir le signal de sortie dudit capteur de mouvement et calculer d'après cela l'allongement de l'éprouvette, caractérisé en ce que la source de lumière du projecteur est une lampe (26) à ultraviolets et le point de repère (2, 3) est fluorescent.

2. Appareil pour essais de traction selon la revendication 1, comportant au moins deux sources (6, 10) pour éclairer deux points de repères espacés (2, 3) sur une éprouvette (1), des moyens de détection respectifs étant présents pour détecter la lumière émise par les points de repère correspondants, et le moyen de calcul (12) étant agencé pour calculer la distance entre lesdits points de repère.

3. Appareil pour essais de traction selon la revendication 1, dans lequel le détecteur (36) inclus dans l'ensemble d'optiques est un détecteur multiéléments à semiconducteurs.

4. Appareil pour essais de traction selon la revendication 3, dans lequel ledit détecteur multiéléments (36) à semiconducteurs comporte deux semiconducteurs multi-éléments divisés de manière égale, dont les sorties servent à centrer le dispositif à projecteur et optiques.

5. Appareil pour essais de traction selon l'une quelconque des revendications 1 à 4, dans lequel les mécanisme de poursuite comportent chacun un moteur électrique (5, 9) d'équilibrage actionné en fonction de signaux de détection venant du détecteur de l'ensemble d'optiques correspondant et une vis-mère (14, 15) d'actionnement dudit dispositif qui est entraînée en rotation par le moteur électrique.

6. Appareil pour essais de traction selon l'une quelconque des revendications 1 à 5, dans lequel ladite unité de calcul (12, 13) comporte un enregistreur (13) pour enregistrer les résultats de celle-ci.

FIG. 1

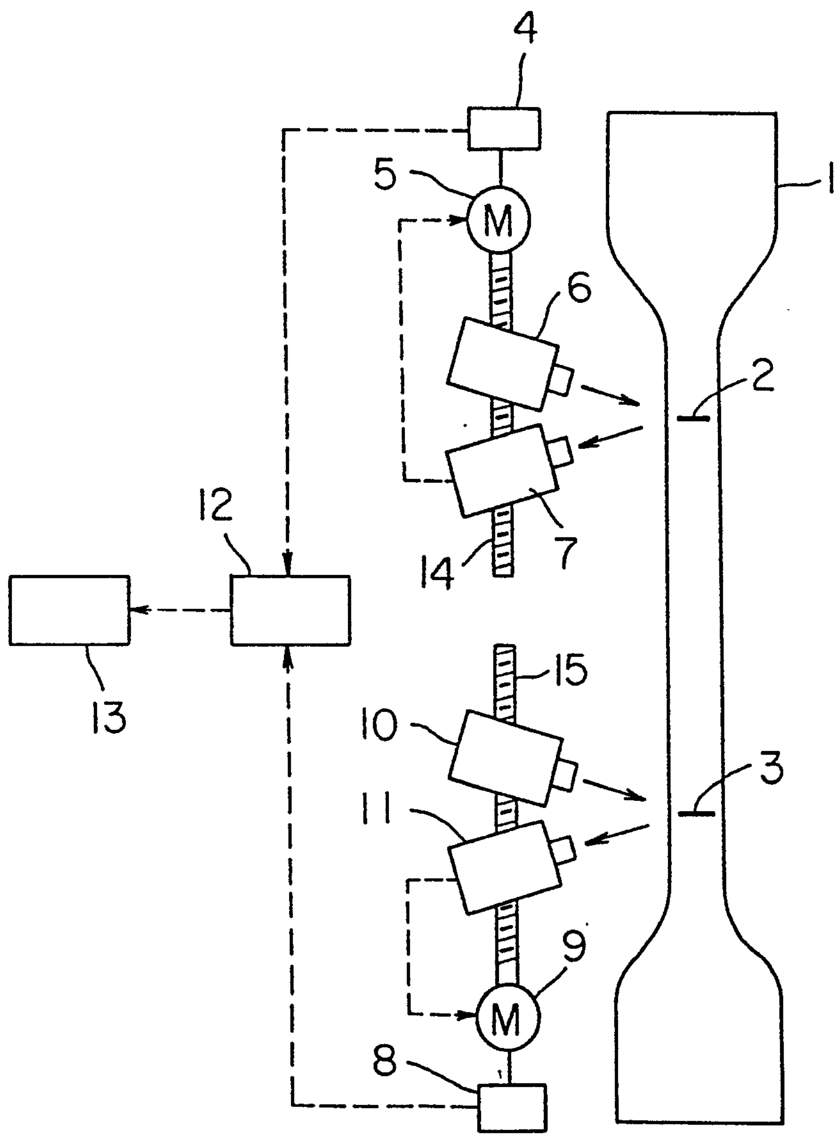

FIG. 2

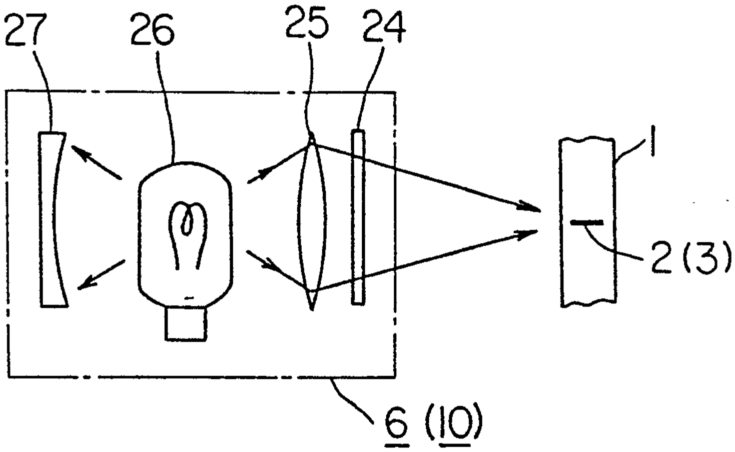


FIG. 3